# EUROPÄISCHE PATENTSCHRIFT

(11) **EP 0 846 580 B1**
(45) Veröffentlichungstag und Bekanntmachung des Hinweises auf die Patenterteilung: **12.05.2004**
(21) Anmeldenummer: 97119963.3
(22) Anmeldetag: 14.11.1997
(51) Int. Cl.: B60H 1/00

(54) **Fahrzeugunabhängige Heiz- und Lüftungseinrichtung für Kraftfahrzeuge, insbesondere Personenkraftwagen**
Vehicle independent heating and ventilation device for a vehicle, particularly for passenger cars
Dispositif de chauffage et de ventilation pour véhicule automobile, notamment pour voiture de tourisme, indépendant du véhicule

(30) Priorität: 07.12.1996 DE 19650942
(43) Veröffentlichungstag der Anmeldung: 10.06.1998
(73) Patentinhaber: Bayerische Motoren Werke Aktiengesellschaft, 80788 München (DE)
(72) Erfinder: Kazenwadel, Horst, 80639 München (DE)

(56) Entgegenhaltungen:
- EP-A- 0 266 767
- EP-A- 0 410 283
- DE-A- 19 539 517

## Beschreibung

Die Erfindung bezieht sich auf ein Kraftfahrzeug mit einer Heiz -, Belüftungs - und Klimaeinrichtung, insbesondere Pkw.

Ein Kraftfahrzeug mit einer derartigen, als Klimakompaktmodul bezeichneten Einrichtung ist beispielsweise aus der DE 195 39 517 A1 bekannt, wobei sämtliche Komponenten dieser Heiz -, Belüftungs - und Klimaeinrichtung fahrgastraumseitig zwischen der Spritzwand und dem Armaturenbrett angeordnet sind.

Nachteilig bei dieser bekannten Anordnung ist eine relativ weit von den vorderen, mit den A-Säulen in Verbindung stehenden Türpfosten in Fahrtrichtung in den Fahrzeugfrontbereich versetzte Stirnwand, wodurch das Crash-Verhalten im Vorderwagen des Kraftfahrzeuges ungünstig beeinflusst ist.

Der Erfindung liegt die Aufgabe zugrunde, für ein Kraftfahrzeug mit einer Belüftungs - und Klimaeinrichtung einschließlich einer vom Fahrzeug unabhängig betreibbaren Heizeinrichtung eine Anordnung aufzuzeigen, mittels der die Spritzwand bei einem Crash hohe Kräfte übertragen kann.

Diese Aufgabe ist mit dem Patentanspruch 1 gelöst.
Mit der Erfindung ist in vorteilhafter Weise eine in drei gesonderte Montagegruppen aufgeteilte Heiz -, Belüftungs - und Klimaeinrichtung erzielt, von der beispielsweise bei einem Pkw mit im Frontbereich angeordnetem Antriebsaggregat zwei Gruppen bzw. Baueinheiten frontseitig der Spritzwand angeordnet sind, während im Fahrgastraum als weitere Baueinheit lediglich das modular gestaltete Luftverteilungssystem anzuordnen ist. Mit dieser erfindungsgemäßen Anordnung kann die Spritzwand crash-günstig im Bereich der vorderen Türpfosten im Karosserieaufbau integriert werden. Des weiteren ist für die Einbringung der unbehandelten Frischluft oder der gekühlten Frischluft oder der erwärmten Frischluft oder der getrockneten und erwärmten Frischluft sowie gemischter Frischluft in das fahrgastraumseitige Luftverteilungssystem ein Walzendrehschieber in einer Durchbrechung der Spritzwand vorgesehen, über dessen entsprechend gewählte Abmessungen eine großflächige Durchbrechung in der Spritzwand vermeidbar ist, so dass bei einem Crash auch dadurch in vorteilhafter Weise hohe Kräfte übertragen werden können.

Außerdem eröffnet sich eine weitergehende Gestaltungsmöglichkeit der Spritzwand im Hinblick auf die Fußraumgestaltung einerseits und eine freiere Ausbildung des Armaturenbrettes andererseits.

Eine vorteithaft klein bauende, der Frischluft - Ansaugung dienende erste Modul-Baueinheit ist mit einem etwa halbkreisförmig um ein Gebläse -Laufrad angeordneten Verdampfer erzielt, wie dieser an sich aus der EP 0 410 283 A bekannt ist.

Weiter kann die kombinierte Einrichtung beispielsweise gemäß der DE 195 39 517 A1 zusätzlich derart gestaltet sein, dass die fahrzeugunabhängige Heizeinrichtung mit einem von der Kühlflüssigkeit eines Antriebsaggregates beaufschlagten Wärmetauscher in Verbindung steht. Insbesondere kann diese Anordnung der Anwärmung einer flüssigkeitsgekühlten Brennkraftmaschine vor einem Kaltstart dienen, wobei auch andere Betriebsstoffe wie Schmieröl und/oder Dieselkraftstoff vorgewärmt werden können.

Schließlich kann auf jeder Seite des Fahrgastraumes eine erfindungsgemäß kombinierte Einrichtung angeordnet sein entsprechend der bekannten Anordnung aus der EP 0 266 767 A. Vorteil ist die Möglichkeit der Anordnung von Komfort - und Informationsgeräten im Mittenbereich des Armaturenbrettes.

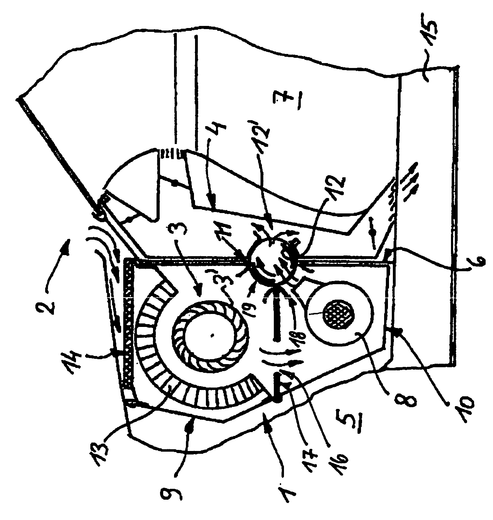

Die Erfindung ist anhand einer in der Zeichnung schematisch dargestellten Heiz- , Belüftungs- und Klimaeinrichtung in einem abschnittsweise dargestellten Pkw beschrieben.

Eine fahrzeugunabhängige, d.h. eine vom Kühlmittel einer flüssigkeitsgekühlten Brennkraftmaschine unabhängige Heiz- und Belüftungseinrichtung 1 für einen PKW 2 ist mit einem außenluftansaugenden Gebläse 3 ausgerüstet sowie mit einem Luftverteilungssystem 4 für die Zuführung von Frischluft und/oder erwärmter Frischluft in einen vom Fahrzeugfrontbereich 5 durch eine Spritzwand 6 abgegrenzten Fahrgastraum 7, wobei der Erwärmung der Frischluft ein kraftstoffbetriebenes Heizgerät 8 dient

Zur Erzielung einer einfachen Montage der Heiz- und Belüftungseinrichtung 1 sind das Gebläse 3 und das Heizgerät 8 jeweils als eine modulare Baueinheit 9, 10 frontseitig der Spritzwand 6 angeordnet, wobei das fahrgastraumseitig der Spritzwand 6 zugeordnete, modular gestaltete Luftverteilungssystem 4 über einen eine Durchbrechung 11 in der Spritzwand 6 fluidsteuemden Walzendrehschieber als Verteiler 12 mit dem Gebläse 3 und/oder dem Heizgerät 8 in Verbindung steht.

Weiter ist aus der einzigen Figur ersichtlich, dass die der Luftansaugung dienende Baueinheit 9 über eine Verbindungsöffnung 16 in einer Trennwand 17 mit der das Heizgerät 8 umfassenden Baueinheit 10 in luftführender Verbindung steht. Weiter weisen die beiden frontseitigen Baueinheiten 9,10 von einem gemeinsamen Waizendrehschieber 12 gesteuerte Abströmöffnungen 18,19 auf.

Die aus den modularen Baueinheiten 4, 9 und 10 gebildete, diesseits und jenseits der Spritzwand 6 angeordnete Heiz- und Belüftungseinrichtung 1 kann durch einen stromauf des Gebläses 3 angeordneten Verdampfer 13 eines nicht näher gezeigten Kältemittelkreislaufes zu einer Klimaeinrichtung erweitert sein. Zur Erzielung einer kleinbauenden modularen Baueinheit 9 ist der Verdampfer 13 als etwa halbkreisförmiges Bauteil dem Gebläse-Laufrad 3' zugeordnet.

Weiter ist die modulare Baueinheit 9 stromauf des Verdampfers 13 mit einem Filter 14 auf der Zuströmseite ausgerüstet.

Zur vorteilhaften Funktionserweiterung der fahrzeugunabhängigen Heiz-, Belüftungs- und Klimaeinrichtung 1 kann das Heizgerät 8 der modularen Baueinheit 10 mit einem von der Kühlflüssigkeit eines Antriebsaggregates, insbesondere einer nicht gezeigten Brennkraftmaschine, beaufschlagten Wärmetauscher in Verbindung stehen.

Die in der einzigen Figur schematisch dargestellte Heiz-, Belüftungs- und Klimaeinrichtung 1 ist zu einem Getriebetunnel 15 des PKW 2 in etwa gemittelt angeordnet gezeigt. Diese Einrichtung 1 kann aber auch in zwei voneinander unabhängig wirksame Einrichtungen für jede Seite des Fahrgastraumes 7 aufgeteilt sein.

Mit der erfindungsgemäß vorteilhaften Aufteilung des Einbauraumes diesseits und jenseits der Spritzwand 6 für die Heiz-, Belüftungs- und Klimaeinrichtung 1 zur Erzielung einer einfachen Montage ergibt sich als weiterer Vorteil einer lediglich durch die Durchbrechung 11 für den Walzendrehschieber 12 des Verteilers 12' durchbrochene Spritzwand 6, die damit bei einem Crash hochbelastbar ist.

Der Walzendrehschieber 12 des Verteilers 12' in der gezeigten Stellung dient der Zufuhr einer gefilterten und erwärmten Frischluft über das Luftverteilsystem 4 in den Fahrgastraum 7. Bei einer Drehung des Walzendrehschiebers 12 in Pfeilrichtung um ca. 120° wird in den Fahrgastraum 7 gefilterte Frischluft oder gefilterte und gekühlte und damit klimatisierte Frischluft dem Fahrgastraum 7 zugeführt. Bei einer weiteren Drehung des Walzendrehschiebers 12 um weitere 120° ist der Zustrom in das Luftverteilsystem 4 gesperrt. Wie aus der schematischen Darstellung erkennbar, sind auch Zwischenstellungen möglich, so daß beispielsweise über den Verdampfer 13 getrocknete Luft teilweise über das Heizgerät 8 geführt und beide Ströme miteinander gemischt dem Luftverteilsystem 4 zugeführt sind.

## Patentansprüche

1. Kraftfahrzeug mit einer fahrzeugunabhängigen Heiz-, Belüftungs- und Klimaeinrichtung, insbesondere Pkw,
- wobei einem vom Fahrzeugfrontbereich (5) mittels einer Spritzwand (6) abgegrenzten Fahrgastraum (7) frontseitig dieser Spritzwand (6) modulare, ein Gebläse (3) einerseits und ein Heizgerät (8) andererseits umfassende Baueinheiten (9,10) als selbständige Montagegruppen zugeordnet sind und
- fahrgastraumseitig an dieser Spritzwand (6) eine weitere Montagegruppe als modular gestaltetes Luftverteilungssystem (4) angeordnet ist, wobei ferner
- die der Ansaugung der Außenluft mittels des Gebläses (3) über einen Filter (14) und einen zwischengeschalteten Verdampfer (13) dienende. Baueinheit (9) über eine Verbindungsöffnung (16) in einer Trennwand (17) mit der benachbarten, ein kraftstoffbetriebenes Frischluft-Heizgerät (8) umfassenden Baueinheit (10) in luftführender Verbindung steht, und wobei
- beide frontseitige Baueinheiten (9,10) von einem einzigen Walzendrehschieber (12) gesteuerte Abströmöffnungen (18,19) aufweisen, wobei
- der auch als Mischeinrichtung dienende Walzendrehschieber (12) eine Durchbrechung (11) der Spritzwand (6) durchgreift und mit dem fahrgastraumseitig der Spritzwand (6) angeordneten Luftverteilungssystem (4) in luftführender Verbindung steht.

2. Kraftfahrzeug nach Anspruch 1, **dadurch gekennzeichnet, dass** der Verdampfer (13) als etwa halbkreisförmiges Bauteil dem Gebläse-Laufrad (3') zugeordnet ist.

3. Kraftfahrzeug nach Anspruch 1 oder 2, **dadurch gekennzeichnet, dass** das Heizgerät (8) mit einem von der Kühlflüssigkeit eines Antriebsaggregates beaufschlagten Wärmetauscher in Verbindung steht.

4. Kraftfahrzeug nach einem der Ansprüche 1 bis 3, **dadurch gekennzeichnet, dass** voneinander unabhängig wirksame Einrichtungen (1) für jede Seite des Fahrgastraumes (7) vorgesehen sind.

## Claims

1. A motor vehicle, especially a passenger car, with an independent heating, ventilation and air-conditioning system,
- wherein independent assembly groups in the form of structural units (9, 10) comprising a fan (3) and a heater (8) are in front of a splashboard (6) and associated with a passenger compartment (7) separated from the front region (5) of the vehicle by the splashboard (6), and
- an additional assembly group in the form of a modular air distribution system (4) is disposed on the splashboard (6) and on the same side as the passenger compartment, wherein
- the structural unit (9) for sucking in external air by means of the fan (3) via a filter (14) and an interposed evaporator (13) is connected with and supplies air, via a connecting opening (16) in a partition (17), to a neighbouring structural unit (10) comprising a fuel-operated fresh air heater (8), wherein
- both structural units (9, 10) at the front have outflow openings (18, 19) controlled by a single rotary slide valve (12), wherein
- the rotary slide valve (12), which is also a mixer, extends through an aperture (11) in the splashboard (6) and is connected and supplies air to the air distribution system (4) disposed on the passenger side of the splashboard (6).

2. A vehicle according to claim 1, **characterised in that** the evaporator (13) is an approximately semicircular component and is associated with the fan impeller (3').

3. A vehicle according to claim 1 or 2, **characterised in that** the heater (8) is connected to a heat exchanger supplied with the fluid for cooling a drive unit.

4. A vehicle according to any of claims 1 to 3, **characterised in that** independently operating devices (1) are provided for each side of the passenger compartment (7).

## Revendications

1. Véhicule automobile comportant une installation de chauffage, de ventilation et de climatisation indépendante du véhicule, en particulier une voiture de tourisme,
- dans lequel sous forme de groupes de montage indépendants des unités modulaires (9, 10) qui comprennent une soufflante (3) d'une part et un appareil de chauffage (8) d'autre part sont associées à un espace intérieur (7) séparé de la zone frontale de véhicule (5) à l'aide d'un panneau d'auvent (6), à l'avant de ce panneau d'auvent (6) et
- un autre groupe de montage sous forme de système de distribution d'air (4) structuré de façon modulaire est disposé du côté de l'espace intérieur sur ce panneau d'auvent (6), dans lequel en outre
- au moyen d'une ouverture de liaison (16) dans une paroi (17), l'unité (9) qui sert à aspirer l'air extérieur à l'aide de la soufflante (3) par l'intermédiaire d'un filtre (14) et d'un évaporateur (13) intercalé est en liaison conductrice d'air avec l'unité (10) voisine qui comprend un appareil de chauffage (8) d'air frais fonctionnant au carburant et dans lequel
- les deux unités (9, 10) frontales, commandées par une seule vanne rotative de cylindre (12), présentent des ouvertures d'écoulement (18, 19) commandées ;
- la vanne rotative de cylindre (12) qui sert aussi d'installation de mélange traverse alors un passage (11) du panneau d'auvent (6) et est en liaison conductrice d'air avec le système de distribution d'air (4) disposé du côté de l'espace intérieur du panneau d'auvent (6).

2. Véhicule automobile selon la revendication 1,
**caractérisé en ce que**
l'évaporateur (13) est associé au rotor de soufflante (3') sous forme de composant approximativement en demi-cercle.

3. Véhicule automobile selon la revendication 1 ou 2,
**caractérisé en ce que**
l'appareil de chauffage (8) est en liaison avec un échangeur de chaleur alimenté par le liquide de refroidissement d'un groupe d'entraînement.

4. Véhicule automobile selon l'une des revendications 1 à 3,
**caractérisé en ce que**
pour chaque côté de l'espace intérieur (7) on prévoit des installations (1) actives indépendamment l'une de l'autre.
